# EUROPÄISCHE PATENTSCHRIFT

(11) **EP 2 718 579 B1**
(45) Veröffentlichungstag und Bekanntmachung des Hinweises auf die Patenterteilung: **04.05.2016**
(21) Anmeldenummer: 12766575.0
(22) Anmeldetag: 06.06.2012
(51) Int. Cl.: F16D 23/06

(54) **SYNCHRONISATIONSEINHEIT EINES SCHALTGETRIEBES**
SYNCHRONISATION UNIT FOR A GEAR BOX
UNITÉ DE SYNCHRONISATION D'UNE BOÎTE DE VITESSES

(30) Priorität: 09.06.2011 DE 102011103780
(43) Veröffentlichungstag der Anmeldung: 16.04.2014
(73) Patentinhaber: Hoerbiger Antriebstechnik Holding GmbH, 86956 Schongau (DE)
(72) Erfinder: LEDETZKY, Erol, 74074 Heilbronn (DE)
(74) Vertreter: Prinz & Partner mbB
(86) Internationale Anmeldenummer: PCT/EP2012/002453
(87) Internationale Veröffentlichungsnummer: WO 2012/167946

(56) Entgegenhaltungen:
- EP-A1- 0 515 243
- EP-A1- 1 447 581
- WO-A1-2005/036007
- DE-A1-102009 051 706
- US-A- 5 447 082

## Beschreibung

Die Erfindung betrifft eine Synchronisationseinheit eines Schaltgetriebes, mit einem Synchronkörper, der auf einer Getriebewelle drehfest angebracht ist, einer Schaltmuffe, die relativ zum Synchronkörper drehfest angeordnet ist, einem sperrverzahnungsfrei ausgebildeten Synchronring zur Kopplung des Synchronkörpers mit einem Gangrad des Schaltgetriebes über eine Reibverbindung, sowie einer Vorsynchroneinheit, die an der Schaltmuffe angreift, wobei die Vorsynchroneinheit bei einer axialen Betätigung der Schaltmuffe den Synchronring mit einer axialen Schaltkraft gegen das zu koppelnde Gangrad beaufschlagt und eine Axialverschiebung der Schaltmuffe zum Gangrad hin sperren oder freigeben kann.

Schaltgetriebe, die Synchronisationseinheiten mit sperrverzahnungsfrei ausgebildeten Synchronringen aufweisen, sind beispielsweise aus den gattungsgemäßen Druckschriften DE 10 2007 010 307 B3 sowie DE 10 2009 051 706 A1 bekannt. Derartige Synchronisationseinheiten weisen gegenüber Ausführungsformen mit sperrverzahnten Synchronringen erhebliche Fertigungsvorteile auf. Das Sperren einer axialen Schaltbewegung der Schaltmuffe vor einer Drehzahlsynchronisierung zwischen Synchronkörper und Gangrad wird dabei von der Vorsynchroneinheit übernommen. Die Vorsynchroneinheit umfasst in der DE 10 2007 010 307 B3 einen Synchronstein sowie einen verschieblich im Synchronstein aufgenommenen Sperrstein und in der DE 10 2009 051 706 A1 einen Sperrstein, der an wenigstens einem seiner axialen Ränder eine angeformte Sperrverzahnung aufweist. Die Vorteile und Funktionsweisen der beschriebenen Synchronisationseinheiten sind in den genannten Druckschriften ausführlich erläutert.

Aufgabe der Erfindung ist es, die Konstruktion derartiger Synchronisationseinheiten für Schaltgetriebe fertigungstechnisch weiter zu vereinfachen und dennoch ein äußerst zuverlässiges Schaltverhalten zu gewährleisten.

Diese Aufgabe wird gelöst durch eine Synchronisationseinheit der eingangs genannten Art, bei der an der Schaltmuffe mehrere Kopplungsstifte angebracht sind, die jeweils axial über eine Stirnseite der Schaltmuffe hinausragen und gangradseitig so in eine zugeordnete Kopplungsgeometrie lösbar eingreifen können, dass das Gangrad und der Synchronkörper im Wesentlichen drehfest gekoppelt sind. Die Kopplungsstifte schaffen nach erfolgter Drehzahlsynchronisierung mit geringem Aufwand eine drehfeste Verbindung zwischen der Schaltmuffe und dem Gangrad. Die den Kopplungsstiften zugeordnete Kopplungsgeometrie kann dabei unmittelbar am Gangrad, an einer drehfest mit dem Gangrad verbundenen Kupplungsscheibe oder an einem drehfest mit dem Gangrad verbundenen Kupplungskörper ausgebildet sein und besteht beispielsweise aus mehreren in Umfangsrichtung angeordneten Löchern/Öffnungen oder einer Verzahnung. Eine Teilung der in Umfangsrichtung gleichmäßig verteilten Löcher/Öffnungen bzw. Verzahnungszähne ist dabei vorzugsweise ein ganzzahliges Vielfaches der Anzahl der gleichmäßig über den Umfang verteilten Kopplungsstifte.

Die Kopplungsstifte sind vorzugsweise in Öffnungen gelagert, die sich axial durch die Schaltmuffe erstrecken und in Umfangsrichtung gleichmäßig verteilt sind. Die Herstellung axial ausgerichteter Öffnungen in der Schaltmuffe ist beispielsweise durch Bohren oder Stanzen mit minimalem Aufwand möglich.

Besonders bevorzugt sind die Kopplungsstifte fest mit der Schaltmuffe verbunden. Dies lässt sich beispielsweise über eine Rastverbindung, einen Presssitz oder eine nachträgliche Materialverstemmung realisieren. Alternativ oder zusätzlich können die Kopplungsstifte aber auch durch Verschweißen, Presskleben oder Ähnliches an der Schaltmuffe befestigt sein.

In einer Ausführungsform der Synchronisationseinheit weisen die Kopplungsstifte einen rechteckigen Querschnitt auf. Dies bietet den Vorteil, dass die zugeordnete Kopplungsgeometrie analog zu herkömmlichen Synchronisationseinheiten eine konventionelle Schaltverzahnung sein kann. Alternativ sind auch runde oder gebogene Querschnitte denkbar, wobei die zugeordnete Kopplungsgeometrie dann zumeist gleichmäßig über den Umfang verteilte Löchern oder Öffnungen aufweist.

Der Querschnitt der Kopplungsstifte kann sich von der Stirnseite der Schaltmuffe in Richtung zu einem freien Stiftende hin zunächst verringern und dann wieder vergrößern. Dadurch entsteht eine Hinterschneidung, Kerbe oder Nut, welche das unbeabsichtigte Ausrücken eines geschalteten Gangs mit geringem Aufwand zuverlässig verhindert, weil aufgrund des Angriffs an der Hinterschneidung eine Kraft aus der Umfangskraft abgeleitet wird, die in die gekoppelte Schaltstellung drückt.

Ferner ist ein axiales, der Schaltmuffe abgewandtes freies Ende der Kopplungsstifte vorzugsweise keil- oder kegelförmig zugespitzt. Die keilförmigen oder zugespitzten freien Enden erleichtern nach erfolgter Drehzahlsynchronisierung zwischen Gangrad und Synchronkörper das Eingreifen der Kopplungsstifte in die zugeordnete Kopplungsgeometrie, so dass sich ein gewünschter Gang des Schaltgetriebes problemlos und zuverlässig einlegen lässt.

In einer weiteren Ausführungsform der Synchronisationseinheit sind die Schaltmuffe und der Synchronkörper als einstückiger Schaltkörper ausgeführt. Im Vergleich zu einer alternativen Ausführungsvariante, bei welcher die Schaltmuffe relativ zum Synchronkörper axial verschieblich angeordnet ist, verringert sich zum einen der Herstellungsaufwand und zum anderen die Anzahl der erforderlichen Einzelbauteile.

Bei dem einstückigen Schaltkörper kann es sich insbesondere um ein pulvermetallurgisch hergestelltes Sinterteil handeln. Alternativ ist jedoch auch eine Herstellung des Schaltkörpers als gespantes Teil aus einem gewalzten Rohling oder als Blechumformteil denkbar.

Bevorzugt ist der Schaltkörper als einstückige Blechringscheibe ausgebildet oder aus mehreren axial hintereinander angeordneten Blechringscheiben zusammengesetzt. Infolgedessen lässt sich der Schaltkörper, insbesondere bei Verwendung mehrerer dünner Blechringscheiben, einfach und kostengünstig als Stanzteil fertigen.

Die Vorsynchroneinheit umfasst in einer Ausführungsform der Synchronisationseinheit einen Sperrstein, der eine Sperrverzahnung mit mehreren Sperrzähnen aufweist, wobei die Sperrverzahnung eine Axialbewegung der Schaltmuffe relativ zum Sperrstein freigeben oder sperren kann.

In einer alternativen Ausführungsform ist die Vorsynchroneinheit eine Sperrkeilsynchronisationsbaugruppe mit einem Synchronstein, einem Federelement und einem Sperrstein, wobei der Sperrstein durch das Federelement radial gegen die Schaltmuffe beaufschlagt ist und eine Axialbewegung der Schaltmuffe zum Gangrad hin freigeben oder sperren kann. Eine solche Sperrkeilsynchronisationsbaugruppe ist in der DE 10 2007 010 307 B3 gezeigt.

In dieser Ausführungsform stützt sich der Synchronstein in radialer Richtung vorzugsweise am Synchronring ab. Dies bietet den Vorteil, dass bei einer Relativdrehung zwischen Synchronkörper und Synchronring (sogenanntes "Umschlagen" der Synchronisationseinheit) keine unerwünschte Reibung zwischen dem in Umfangsrichtung drehfest mit dem Synchronring gekoppelten Synchronstein und dem Synchronkörper auftritt.

Vorzugsweise ist die Sperrkeilsynchronisationsbaugruppe eine vormontierte und vorgespannte Baueinheit, bei der sich das Federelement am Synchronstein abstützt. Hieraus resultiert ein deutlich verringerter Montageaufwand, so dass sich die Synchronisationseinheit in diesem Fall deutlich schneller zusammensetzen lässt.

In einer weiteren Ausführungsform der Synchronisationseinheit umfasst der Sperrstein einen radial im Synchronstein geführten, mittigen Grundkörper sowie axiale Fortsätze, die sich zwischen den Synchronkörper und die Schaltmuffe erstrecken. Diese axialen Fortsätze gewährleisten auch in einer Schaltstellung der Synchronisationseinheit, dass der Sperrstein in einer gewünschten Position gehalten und ein Auslegen des geschalteten Gangs nicht behindert wird. Dadurch kann insbesondere bei "schmalen" Schaltmuffen, d.h. Schaltmuffen mit geringer axialer Abmessung, ein einwandfreier Schaltbetrieb bei hoher Schaltsicherheit gewährleistet werden.

Vorzugsweise erstrecken sich die axialen Fortsätze des Sperrsteins radial weiter nach außen als der Grundkörper, sodass sich auf einer radialen Außenseite des Sperrsteins eine Nut ausbildet, die in tangentialer Richtung verläuft. Eine radiale Außenseite des Grundkörpers kann hierbei jeweils durch eine geneigte Nutflankenfläche mit einer radialen Außenseite der Fortsätze verbunden sein.

Die Schaltmuffe weist in diesem Fall bevorzugt einen Blocksperrzahn auf, der in einer nicht-geschalteten Neutralstellung der Synchronisationseinheit in die Nut des Sperrsteins eingreift. Dadurch entsteht auf einfache Weise eine axiale Schaltmitnahme zwischen Schaltmuffe und Sperrstein. Dies bedeutet, dass bei einer axialen Betätigung der Schaltmuffe der jeweilige Synchronring über den Sperrstein und den Synchronstein in axialer Richtung hin zu einer gangradseitigen Reibfläche beaufschlagt wird. Zudem lässt sich mit geringem Aufwand über die Neigung der Nutflankenfläche sicherstellen, dass die axiale Schaltkraft nach einer Drehzahlsynchronisierung zwischen dem Synchronkörper und dem Gangrad ausreicht, um den Sperrstein radial in den Synchronstein eintauchen zu lassen, sodass ein axiales "Durchschalten" der Schaltmuffe, d.h. ein Eingriff der Kopplungsstifte in die zugeordnete Kopplungsgeometrie, möglich ist.

Vorzugsweise ist der Blocksperrzahn axial durch geneigte Sperrflächen begrenzt, die in einer nicht-geschalteten Neutralstellung der Synchronisationseinheit jeweils an eine der geneigten Nutflankenflächen angrenzen. Dabei weisen die Sperrflächen und die Nutflankenflächen insbesondere die gleiche Neigung auf, um die auftretenden Flächenpressungen und den damit einhergehenden Verschleiß am Blocksperrzahn und am Sperrstein gering zu halten.

In einer weiteren Ausführungsform der Synchronisationseinheit sind an axialen Enden der axialen Sperrsteinfortsätze Haltenasen angeformt, die sich radial nach außen erstrecken. Diese Haltenasen schaffen auf einfache Art und Weise einen vorteilhaften Schaltanschlag, der eine axiale Bewegung der Schaltmuffe beim Durchschalten begrenzt. Zusätzlich verhindern die Haltenasen, dass der Sperrstein in einer axial ausgelenkten Schaltstellung der Synchronisationseinheit auf der Seite des nicht-geschalteten Gangs in unerwünschter Weise axial neben die Schaltmuffe gelangt und radial nach außen schnappt.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine perspektivische Längsschnittansicht einer erfindungsgemäßen Synchronisationseinheit in einer nicht-geschalteten Neutralstellung;
- Figur 2 die perspektivische Längsschnittansicht der Synchronisationseinheit gemäß Figur 1 in einer axial ausgelenkten Schaltstellung;
- Figur 3 eine perspektivische Querschnittansicht der Synchronisationseinheit gemäß Figur 1 im Bereich einer Vorsynchroneinheit;
- Figur 4 einen schematischen Detailschnitt durch einen Kopplungsstift und eine Schaltmuffe der erfindungsgemäßen Synchronisationseinheit;
- Figur 4a verschiedene Querschnittsgeometrien der bei der Erfindung verwendbaren Kopplungsstifte;
- Figur 5 eine perspektivische Längsschnittansicht der erfindungsgemäßen Synchronisationseinheit in einer alternativen Ausführungsvariante;
- Figur 6 eine perspektivische Längsschnittansicht der erfindungsgemäßen Synchronisationseinheit in einer weiteren alternativen Ausführungsvariante;
- Figur 7 eine perspektivische Längsschnittansicht der erfindungsgemäßen Synchronisationseinheit in einer weiteren alternativen Ausführungsvariante;
- Figur 8 eine perspektivische Längsschnittansicht der erfindungsgemäßen Synchronisationseinheit in noch einer weiteren alternativen Ausführungsvariante;
- Figur 9 ein Schnittdetail einer Vorsynchroneinheit der Synchronisationseinheit gemäß Figur 8;
- Figur 10 eine perspektivische Detailansicht eines Sperrsteins der Vorsynchroneinheit gemäß Figur 1;
- Figur 11 eine perspektivische Längsschnittansicht der erfindungsgemäßen Synchronisationseinheit in einer weiteren alternativen Ausführungsform;
- Figur 12 eine perspektivische Detailansicht einer Schaltmuffe der Synchronisationseinheit;
- Figur 13 eine perspektivische Längsschnittansicht der Synchronisationseinheit mit einer Schaltmuffe gemäß Figur 12;
- Figur 14 einen schematischen Querschnitt durch einen Schaltkörper der Synchronisationseinheit gemäß einer Ausführungsvariante nicht Teil der Erfindung und
- Figur 15 einen schematischen Längsschnitt durch eine Synchronisations einheit mit einem Schaltkörper gemäß Figur 14.

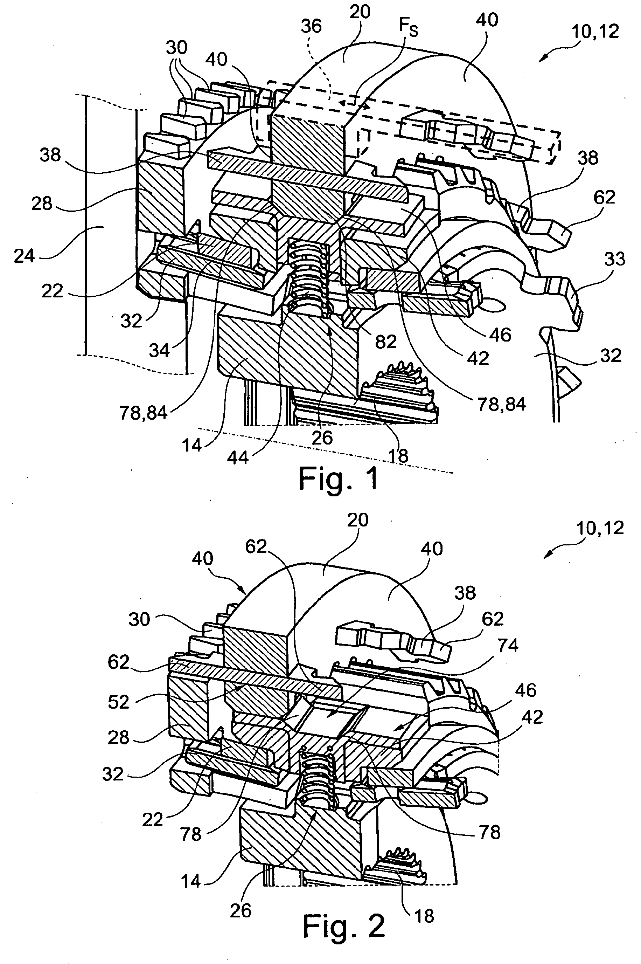

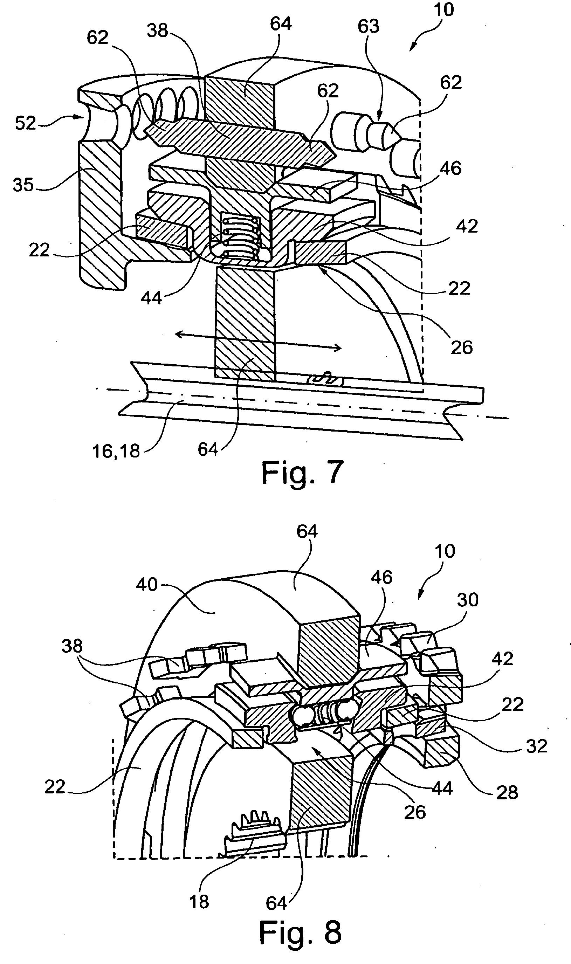

Die Figur 1 zeigt eine Synchronisationseinheit 10 eines Schaltgetriebes 12 insbesondere für Fahrzeuge, mit einem Synchronkörper 14, der auf einer um eine Getriebeachse A drehbaren Getriebewelle 16 (vgl. Figur 7) mittels ineinandergreifender Verzahnungen 18 drehfest angebracht ist, einer Schaltmuffe 20, die relativ zum Synchronkörper 14 drehfest angeordnet ist, einem sperrverzahnungsfrei ausgebildeten Synchronring 22 zur Kopplung des Synchronkörpers 14 mit einem Gangrad 24 des Schaltgetriebes 12 über eine Reibverbindung, sowie einer Vorsynchroneinheit 26, die an der Schaltmuffe 20 angreift. Die Vorsynchroneinheit 26 beaufschlagt bei einer axialen Betätigung der Schaltmuffe 20 den Synchronring 22 mit einer axialen Schaltkraft Fₛ gegen das zu koppelnde Gangrad 24 und kann eine Axialverschiebung der Schaltmuffe 20 zum Gangrad 24 hin sperren oder freigeben.

Im Ausführungsbeispiel gemäß Figur 1 umfasst die Synchronisationseinheit 10 eine Kupplungsscheibe 28, die drehfest am Gangrad 24 befestigt ist und eine Schaltverzahnung 30 aufweist. Ferner ist ein separater, konusförmiger Reibring 32 vorgesehen, der über Mitnahmevorsprünge 33 drehfest mit der Kupplungsscheibe 28 verbunden ist und eine konusförmige Reibfläche 34 aufweist, welche mit einer komplementären Reibfläche 34 des Synchronrings 22 eine Reibverbindung eingehen kann, um vor einem Schaltvorgang die Drehzahlen des Synchronkörpers 14 und des Gangrads 24 aneinander anzugleichen.

Alternativ zur Kupplungsscheibe 28 kann auch ein drehfest mit dem Gangrad 24 verbundener Kupplungskörper 35 vorgesehen sein (vgl. Figur 7), der sowohl die Reibfläche 34 als auch die Schaltverzahnung 30 oder eine alternative Kopplungsgeometrie aufweist. Schließlich sind auch Ausführungsvarianten denkbar, bei denen die Reibfläche 34 und/oder die Kopplungsgeometrie unmittelbar am Gangrad 24 angeformt sind.

Die Figur 1 zeigt die Synchronisationseinheit 10 in einer nicht-geschalteten Neutralstellung, in der die Schaltmuffe 20 axial mittig zum Synchronkörper 14 ausgerichtet und der Synchronkörper 14 mit keinem der angrenzenden Gangräder 24 in Umfangsrichtung gekoppelt ist, wobei in Figur 1 aus darstellungstechnischen Gründen lediglich eine der axial beidseits des Synchronkörpers 14 angeordneten Kupplungsscheiben 28 und lediglich eines der axial beidseits des Synchronkörpers 14 angeordneten Gangräder 24 angedeutet sind. Durch Aufbringen einer axialen Schaltkraft Fₛ über eine angedeutete Schaltgabel 36 lässt sich die Synchronisationseinheit 10 nach einer Drehzahlsynchronisierung zwischen dem Synchronkörper 14 und dem zu koppelnden Gangrad 24 jedoch in eine axial ausgelenkte Schaltstellung überführen, welche in Figur 2 dargestellt ist.

Um die Schaltmuffe 20 im Wesentlichen drehfest mit der Kupplungsscheibe 28 zu koppeln, sind an der Schaltmuffe 20 mehrere Kopplungsstifte 38 angebracht, die jeweils axial über eine Stirnseite 40 der Schaltmuffe 20 hinausragen und gangradseitig in eine zugeordnete Kopplungsgeometrie eingreifen, welche in den Figuren 1 und 2 als Schaltverzahnung 30 ausgeführt ist.

Durch den Einsatz der Kopplungsstifte 38 lässt sich die "Schaltmuffendicke", d.h. die Abmessung der Schaltmuffe 20 in axialer Richtung, erheblich verringern, was zu einer vorteilhaften Materialeinsparung führt. Darüber hinaus kann die Schaltmuffe 20 aufgrund ihrer geringeren axialen Abmessung auch mit deutlich geringerem Aufwand hergestellt werden, beispielsweise als einfaches Stanzteil.

Im Übrigen lässt sich die Schaltmuffe 20 durch den Einsatz der Kopplungsstifte 38 auch auf einfache Art und Weise an die jeweilige Drehmomentbeanspruchung anpassen, indem die Anzahl der Kopplungsstifte 38 soweit reduziert wird, dass das maximale Drehmoment unter Berücksichtigung vorgegebener Sicherheiten gerade noch übertragen werden kann. Hierzu werden beispielsweise nicht alle Öffnungen 52 der Schaltmuffe 20 mit Kopplungsstiften 38 besetzt, sondern nur so viele, wie für die konkrete Ausführungsform notwendig sind. Dadurch lässt sich zum einen Material einsparen und zum anderen das Gewicht der Synchronisationseinheit 10 reduzieren.

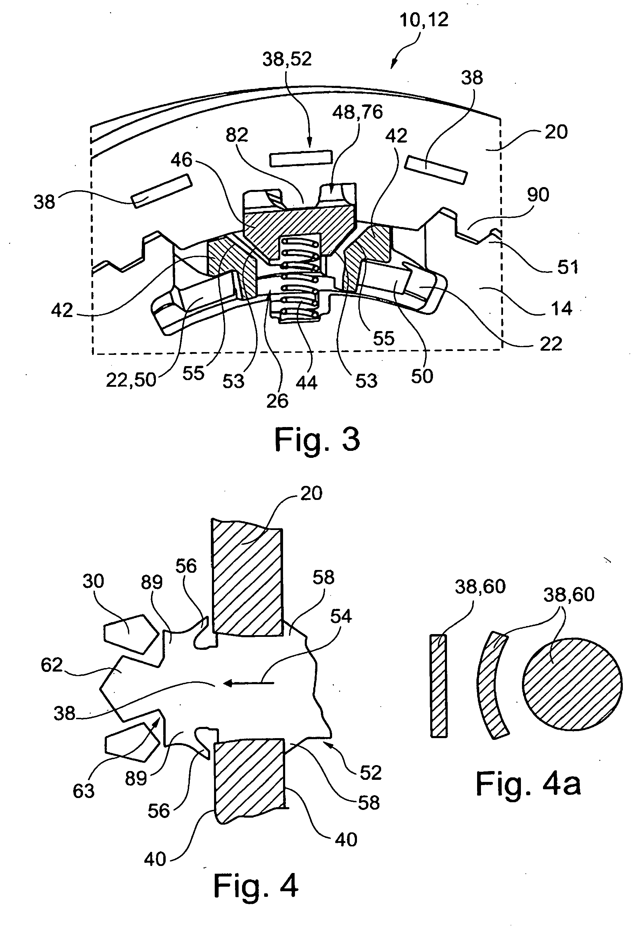

Die Figur 3 zeigt einen Querschnitt durch die Synchronisationseinheit 10 gemäß den Figuren 1 und 2 im Bereich der Vorsynchroneinheit 26.

Im Ausführungsbeispiel gemäß den Figuren 1 bis 3 ist die Vorsynchroneinheit 26 eine Sperrkeilsynchronisationsbaugruppe mit einem Synchronstein 42, einem Federelement 44 und einem Sperrstein 46, wobei der Sperrstein 46 durch das Federelement 44 radial gegen die Schaltmuffe 20 beaufschlagt ist und an der Schaltmuffe 20 anliegt. Dabei kann der Sperrstein 46 eine Axialbewegung der Schaltmuffe 20 zum Gangrad 24 hin freigeben oder sperren. Der Ablauf eines Schaltvorgangs sowie die allgemeine Funktion einer Getriebesynchronisierung mit Sperrkeilsynchronisationsbaugruppe sind bereits allgemein aus dem Stand der Technik bekannt. Diesbezüglich wird explizit auf die Ausführungen in der DE 10 2007 010 307 B3 Bezug genommen.

In Figur 3 wird deutlich, dass der Sperrstein 46 in eine Ausnehmung 48 der Schaltmuffe 20 eingreift und darin radial geführt ist. Durch den Eingriff in die Ausnehmung 48 ist der Sperrstein 46 außerdem in Umfangsrichtung im Wesentlichen drehfest mit der Schaltmuffe 20 verbunden.

Der Synchronstein 42 erstreckt sich zwischen zwei in Umfangsrichtung beabstandeten Vorsprünge 50 des Synchronrings 22, sodass er in Umfangsrichtung im Wesentlichen drehfest mit dem Synchronring 22 gekoppelt ist. Darüber hinaus stützt sich der Synchronstein 42 in radialer Richtung nicht am Synchronkörper 14, sondern in vorteilhafter Weise ebenfalls am Synchronring 22, insbesondere an den Vorsprüngen 50 des Synchronrings 22 ab. Dadurch wird bei einer Relativdrehung zwischen dem Synchronkörper 14 und dem Synchronring 22 eine unerwünschte Reibung zwischen dem Synchronstein 42 und dem Synchronkörper 14 vermieden.

Im Folgenden wird anhand der Figuren 1 bis 3 das Funktionsprinzip der Sperrsynchronisierung des Schaltgetriebes 12 kurz erläutert. Eine Außenverzahnung 51 des Synchronkörpers 14 sowie der Sperrstein 46 greifen im Wesentlichen spielfrei in eine Innenverzahnung 90 bzw. eine Ausnehmung der Innenverzahnung 90 der Schaltmuffe 20 ein (vgl. Figur 3). Somit sind der Sperrstein 46 und der Synchronkörper 14 in Umfangsrichtung drehfest mit der Schaltmuffe 20 verbunden.

Der Synchronstein 42 ist in Umfangsrichtung zwischen den beiden Vorsprüngen 50 des Synchronrings 22 gelagert und damit im Wesentlichen spielfrei mit dem Synchronring 22 gekoppelt, wobei der Synchronring 22 relativ zum Synchronkörper 14 wiederum begrenzt verdrehbar ist (vgl. ebenfalls Figur 3).

Kommt die Reibfläche 34 des Synchronrings 22 beim Schaltvorgang mit der Reibfläche 34 Reibrings 32 oder des Gangrads 24 in Kontakt, so verdreht sich bei einem Drehzahlunterschied zwischen dem Gangrad 24 und dem Synchronkörper 14 der Synchronstein 42 relativ zum Sperrstein 46. Diese Relativverschiebung bzw. Relativverdrehung wird durch die Schrägflächen 53, 55 des Sperrsteins 46 bzw. des Synchronsteins 42 begrenzt.

Beim Aufbringen der axialen Schaltkraft Fₛ auf die Schaltmuffe 20 zu Beginn des Schaltvorgangs wird der Sperrstein 46 von schrägen Sperrflächen 84 eines Blocksperrzahns 82 radial nach innen beaufschlagt (vgl. Figur 1). Ist die Anpresskraft zwischen den Schrägflächen 53, 55 aufgrund des Drehzahlunterschieds zwischen dem Gangrad 24 und dem Synchronkörper 14 zu groß, so wird eine radial einwärts gerichtete Bewegung des Sperrsteins 46 durch die Schrägflächen 53, 55 blockiert. Erst wenn die Drehzahlen weitgehend synchronisiert sind, reicht die Schaltkraft Fₛ aus, um den Sperrstein 46 radial einwärts und die Schaltmuffe 20 axial auf die Schaltverzahnung 30 der Kupplungsscheibe 28 zu schieben (vgl. Figur 2). Die radiale Bewegung des Sperrsteins 46 wird dabei ermöglicht, indem der Sperrstein 46 und der Synchronstein 42 unter geringfügiger Relativbewegung in Umfangsrichtung entlang ihrer Schrägflächen 53, 55 aneinander gleiten. Am Ende des Schaltvorgangs ist der Synchronkörper 14 schließlich über die Schaltmuffe 20 drehfest mit dem Gangrad 24 gekoppelt.

In einer anderen Ausführungsvariante der Synchronisationseinheit 10 ist die Vorsynchroneinheit 26 nicht als Sperrkeilsynchronisationsbaugruppe ausgebildet, sondern umfasst einen Sperrstein, der eine Sperrverzahnung mit mehreren Sperrzähnen aufweist, wobei die Sperrverzahnung eine Axialbewegung der Schaltmuffe 20 relativ zum Sperrstein freigeben oder sperren kann. Auch die Funktionsweise dieser Getriebesynchronisierung ist bereits allgemein aus dem Stand der Technik bekannt, sodass darauf im Folgenden nicht näher eingegangen wird. In diesem Zusammenhang wird jedoch ausdrücklich auf die DE 10 2009 051 706 A1 hingewiesen, welche eine derartige Synchronisationseinheit 10 detailliert beschreibt.

Unabhängig von der konkreten Ausgestaltung der Vorsynchroneinheit 26 sind die Kopplungsstifte 38 radial von der Vorsynchroneinheit 26 beabstandet sowie vorzugsweise in Öffnungen 52, welche sich axial durch die Schaltmuffe 20 erstrecken, gelagert und in Umfangsrichtung gleichmäßig verteilt (siehe Figur 3). Dabei sind die Kopplungsstifte 38 insbesondere auch in axialer Richtung fest mit der Schaltmuffe 20 verbunden.

Die Figur 4 zeigt schematisch ein Schnittdetail eines Kopplungsstifts 38, der beispielhaft durch eine Rastverbindung an der Schaltmuffe 20 befestigt ist. Der Kopplungsstift 38 wird dabei in axialer Montagerichtung 54 in eine der Öffnungen 52 der Schaltmuffe 20 eingeführt, wobei sich am Kopplungsstift 38 ausgebildete Rastnasen 56 elastisch zu einer Stiftachse des Kopplungsstifts 38 hin verformen. Kommen schließlich am Kopplungsstift 38 ausgebildete Anschläge 58 in Anlage mit der Stirnseite 40 der Schaltmuffe 20, so schnappen, im Wesentlichen gleichzeitig, die elastischen Rastnasen 56 wieder nach außen und stützen sich auf der entgegengesetzten Stirnseite 40 der Schaltmuffe 20 an einem Öffnungsrand der Öffnung 52 ab, wodurch der Kopplungsstift 38 fest mit der Schaltmuffe 20 verrastet ist. Alternativ oder zusätzlich kann der Kopplungsstift 38 natürlich auch mit der Schaltmuffe 20 verpresst, verklebt oder verschweißt sein.

Für den Fall, dass die Schaltmuffe 20 ein pulvermetallurgisch hergestelltes Sinterteil ist, können die Kopplungsstifte 38 alternativ auch _{"}eingesintert" werden. Dies bedeutet, dass die vorgefertigten Kopplungsstifte 38 zunächst in eine Werkzeugform eingelegt und dann zusammen mit der Schaltmuffe 20 gesintert werden. Folglich werden die Kopplungsstifte 38 bereits bei der Herstellung der Schaltmuffe 20 mit dieser verbunden, sodass ein separater Bearbeitungsschritt zur Befestigung der Kopplungsstifte 38 an der Schaltmuffe 20 entfallen kann. Außerdem ist das unmittelbare Einsintern der Kopplungsstifte 38 fertigungstechnisch einfacher zu realisieren als die Herstellung der Öffnungen 52 in der Schaltmuffe 20.

Schließlich ist auch denkbar, dass die Schaltmuffe 20 und die Kopplungsstifte 38 in einem einzigen Sintervorgang gemeinsam gefertigt werden und damit ein einstückiges, pulvermetallurgisch hergestelltes Sinterteil bilden.

Gemäß den Figuren 1 bis 3 weisen die Kopplungsstifte 38 jeweils einen rechteckigen Stiftquerschnitt 60 auf, wobei in Figur 4a auch alternative Ausführungen mit einem gebogenen oder kreisrunden Stiftquerschnitt 60 angedeutet sind.

Unabhängig von der konkreten Querschnittsform sind in den vorliegenden Ausführungsbeispielen nur Kopplungsstifte 38 dargestellt, deren Querschnitt sich im eingebauten Zustand von der Stirnseite 40 der Schaltmuffe 20 in axialer Richtung zu einem freien Stiftende 62 hin zunächst verringert und dann wieder vergrößert. Dadurch entsteht eine Hinterschneidung 63, die beispielsweise bei kreisrunden Stiftquerschnitten 60 als umlaufende Kerbe oder Nut ausgebildet ist (vgl. Figur 7). Die Hinterschneidung 63 hält nach dem "Durchschalten" der Schaltmuffe 20 bei geeigneter Ausbildung der Kopplungsgeometrie an der Kupplungsscheibe 28 die Synchronisationseinheit 10 in der ausgelenkten Schaltstellung gemäß den Figuren 2 oder 4 und verhindert ein unerwünschtes "Ausrücken" des geschalteten Gangs.

Um nach einer Drehzahlsynchronisierung den Eingriff der Kopplungsstifte 38 in die Kopplungsgeometrie und damit eine axiale Verschiebung der Schaltmuffe 20 aus ihrer mittigen Neutralstellung in ihre ausgelenkte Schaltstellung zu vereinfachen, ist außerdem ein axial über die Schaltmuffe 20 hinausragendes, freies Ende 62 der Kopplungsstifte 38 keil- oder kegelförmig zugespitzt.

Werden die Schaltmuffe 20 und die Kopplungsstifte 38 in einem einzigen Sintervorgang gemeinsam hergestellt, so ist zu beachten, dass die Hinterschneidungen 63 aus fertigungstechnischen Gründen erst nachträglich eingebracht werden können.

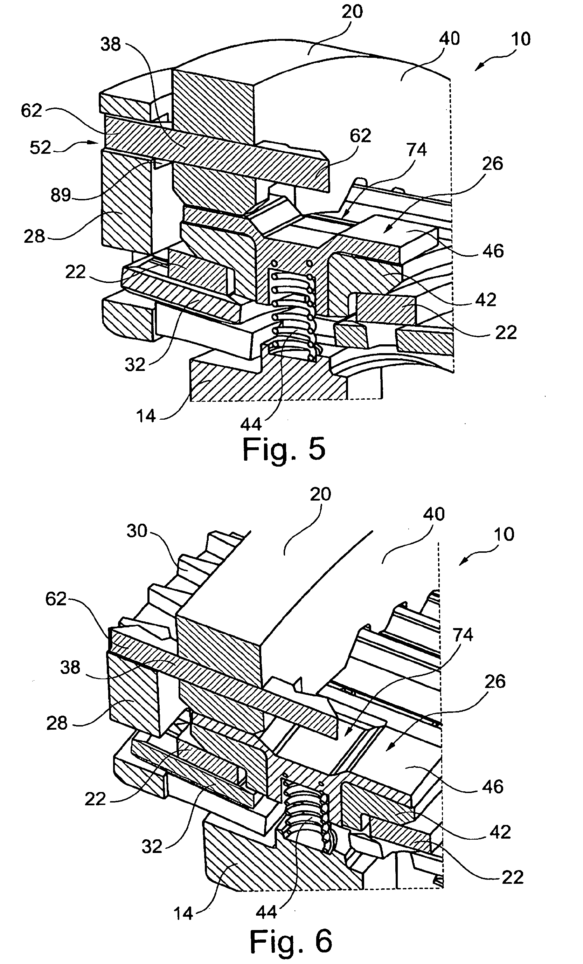

Als Kopplungsgeometrie sind, beispielsweise in der Kupplungsscheibe 28, axiale Löcher oder Öffnungen 52 vorgesehen, welche gleichmäßig über den Umfang der Kupplungsscheibe 28 verteilt sind, wobei die Anzahl der Löcher oder Öffnungen 52 der Anzahl der Kopplungsstifte 38 entspricht oder besonders bevorzugt ein ganzzahliges Vielfaches davon ist. Beispiele für eine Kopplungsgeometrie mit Öffnungen 52 sind in Figur 5 für einen rechteckigen Stiftquerschnitt 60 und in Figur 7 für einen runden Stiftquerschnitt 60 dargestellt.

Ein rechteckiger Querschnitt der Kopplungsstifte 38 bietet den Vorteil, dass die Kopplungsgeometrie auch eine herkömmliche Schaltverzahnung 30 sein kann und folglich keine konstruktive Anpassung der Kupplungsscheibe 28, des Kupplungskörpers 35 oder des Gangrads 24 notwendig ist. Eine solche Ausführungsform der Synchronisationseinheit 10 ist z.B. in Figur 6 dargestellt, wobei die Zahnteilung der Schaltverzahnung 30 in diesem Fall ein ganzzahliges Vielfaches der Anzahl der Kopplungsstifte 38 ist.

Die Figur 7 zeigt eine weitere Ausführungsform der Synchronisationseinheit 10. Hervorzuheben ist dabei, dass die Schaltmuffe 20 und der Synchronkörper 14 als einstückiger Schaltkörper 64 ausgeführt sind.

Gemäß der Ausführungsform in den Figuren 1 bis 3 sind die Schaltmuffe 20 und der Synchronkörper 14 als separate Bauteile ausgebildet, wobei die Schaltmuffe 20 relativ zum Synchronkörper 14 drehfest aber axial verschieblich angeordnet ist.

Bei der einstückigen Ausbildung als Schaltkörper 64 wird bei einem Schaltvorgang mittels der Schaltgabel 36 (vgl. Figur 1) der gesamte Schaltkörper 64 axial auf der Getriebewelle 16 verschoben. Dies reduziert die Anzahl der Einzelbauteile und vereinfacht entsprechend den Zusammenbau der Synchronisationseinheit 10.

Im Übrigen ist der Schaltkörper 64 in Figur 7 als einstückige Blechringscheibe ausgebildet, kann aber alternativ auch aus mehreren axial hintereinander angeordneten Blechringscheiben zusammengesetzt sein. Durch diese Konstruktion lässt sich der Schaltkörper 64 als einfaches Stanzteil sehr kostengünstig fertigen. Die axiale Abmessung des Schaltkörpers 64 liegt üblicherweise in der Größenordnung von etwa 8 mm. Sollten die hohen Qualitätsanforderungen an den Schaltkörper 64 aufgrund der Blechdicke im Stanzverfahren nicht mehr zu erfüllen sein, empfiehlt es sich, den Schaltkörper 64 aus mehreren axial hintereinander angeordneten Blechringscheiben mit einer Blechdicke von beispielsweise 1 oder 2 mm zusammenzusetzen.

Die einzelnen Blechringscheiben werden durch die als Dübel wirkenden Kopplungsstifte 38 zusammengehalten und vorzugsweise mit diesen verpresst, wobei alternativ aber auch eine Verklebung oder Verschweißung möglich ist.

Die entgegengesetzten, freien Stiftenden 62 der Kopplungsstifte 38 sind in einer Ausführungsvariante identisch ausgebildet, sodass der jeweilige Kopplungsstift 38 auf beiden axialen Seiten in eine entsprechende Kopplungsgeometrie eingreifen kann. Es ist jedoch auch denkbar, dass jeder Kopplungsstift 38 lediglich ein axiales Stiftende 62 zum Eingriff in eine zugeordnete Kopplungsgeometrie aufweist. In diesem Fall werden die Kopplungsstifte 38 dann wechselseitig in die Öffnungen 52 der Schaltmuffe 20 bzw. des Schaltkörpers 64 eingeführt. Dies reduziert den Herstellungsaufwand für die Kopplungsstifte 38, halbiert jedoch auch die Anzahl der jeweils zur Kopplung zwischen Gangrad 24 und Synchronkörper 14 bzw. Schaltkörper 64 zur Verfügung stehenden Kopplungsstifte 38.

Die Sperrkeilsynchronisationsbaugruppe gemäß Figur 7 ist eine vormontierte und vorgespannte Baueinheit, bei der sich das Federelement 44 am Synchronstein 42 abstützt. Dies vereinfacht zum einen den Zusammenbau der Synchronisationseinheit 10 und verhindert zum anderen einen unerwünschten Reibkontakt zwischen der Vorsynchroneinheit 26, konkret dem Synchronstein 42 der Vorsynchroneinheit 26 und dem Synchronkörper 14 bzw. dem Schaltkörper 64. Die Vorsynchroneinheit 26 stützt sich nämlich analog zur Ausführungsform gemäß den Figuren 1 bis 3 in radialer Richtung über den Synchronstein 42 am Synchronring 22 der Synchronisationseinheit 10 ab.

Bei Verwendung eines einstückigen Schaltkörpers 64 ist die Ausbildung der Sperrkeilsynchronisationsbaugruppe als vormontierte Baueinheit im Übrigen auch deshalb besonders vorteilhaft, weil das Federelement 44 während des Schaltvorgangs insgesamt um einen sogenannten Vorsynchronweg axial verschoben wird. Dadurch bleibt die Federkraft des als Schraubenfeder ausgebildeten Federelements 44 stets radial ausgerichtet. Wäre die Sperrkeilsynchronisationsbaugruppe hingegen nicht als vormontierte Einheit ausgebildet, bei der sich das Federelement 44 am Synchronstein 42 abstützt (siehe z.B. Figuren 1 bis 3), so würde sich während des Schaltvorgang ein am Sperrstein 46 befestigtes Ende der Schraubenfeder in axialer Richtung lediglich um den Vorsynchronweg, ein entgegengesetztes, am Schaltkörper 64 befestigtes Ende der Schraubenfeder jedoch um den gesamten axialen Schaltweg verschieben. Infolge der resultierenden Federverformung übt die Schraubenfeder unerwünschte Rückstellkräfte in axialer Richtung aus und behindert damit den Schaltvorgang. Unter Umständen kann die Schraubenfeder während des Schaltvorgangs sogar aus der Befestigungsbohrung am Sperrstein 46 oder am Schaltkörper 64 herausspringen, sodass die Synchronisationseinheit 10 funktionsunfähig wäre. Als vormontierte und vorgespannte Baueinheiten ausgebildete Sperrkeilsynchronisationsbaugruppen, bei denen sich das Federelement 44 radial am Synchronstein 42 abstützt, sind bereits in verschiedenen vorteilhaften Ausführungsformen bekannt, wobei diesbezüglich explizit auf die DE 20 2009 016 227 U1 verwiesen wird.

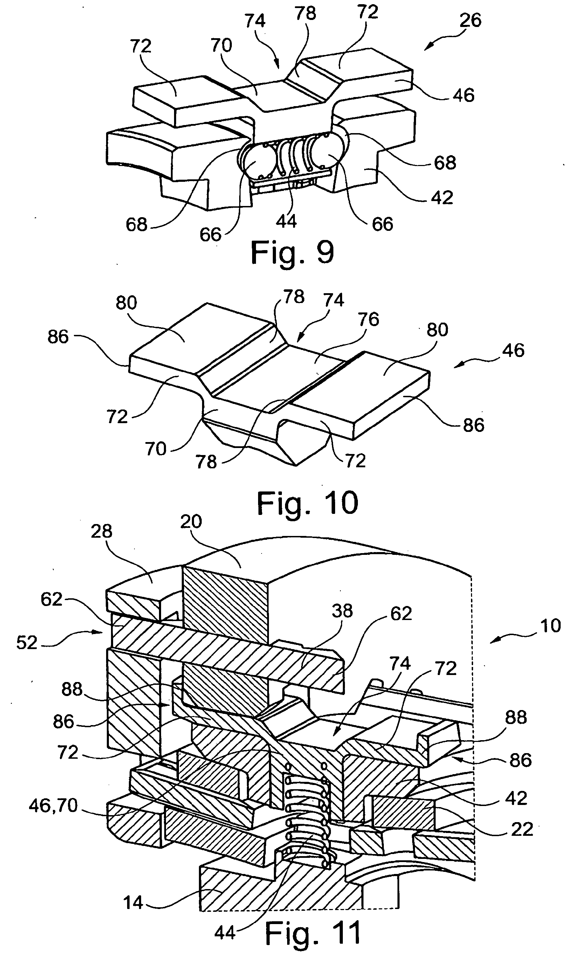

Die Figur 8 zeigt eine weitere Ausführungsform der Synchronisationseinheit 10, die sich von der Ausführungsform gemäß Figur 7 lediglich durch die Konstruktion der in Figur 9 nochmals detaillierter dargestellten Sperrkeilsynchronisationsbaugruppe unterscheidet. Das als Schraubenfeder ausgebildete Federelement 44 erstreckt sich nicht wie in Figur 7 in radialer, sondern in axialer Richtung. Aufgrund der an den Federenden befestigen Andrückkugeln 66 und den damit zusammenwirkenden Eingriffsmulden 68 im Synchronstein 42 wird jedoch auch bei dieser Konstruktion erreicht, dass der Synchronstein 42 radial nach innen gegen die Synchronringe 22 und der Sperrstein 46 radial nach außen gegen die Schaltmuffe 20 bzw. den Schaltkörper 64 gedrückt wird. Nach Überwindung einer vorbestimmbaren Kraft des Federelements 44 kann der Sperrstein 46 jedoch analog zu Figur 7 ebenfalls in eine mittige Öffnung des Synchronsteins 42 "eintauchen".

Die Figur 10 zeigt den Sperrstein 46 der als Sperrkeilsynchronisationsbaugruppe ausgebildeten Vorsynchroneinheit 26, wobei der Sperrstein 46 einen radial im Synchronstein 42 geführten, mittigen Grundkörper 70 aufweist, sowie axiale Fortsätze 72, die sich zwischen den Synchronstein 42 und die Schaltmuffe 20 bzw. den Schaltkörper 64 erstrecken.

Insbesondere bei Schaltmuffen 20 bzw. Schaltkörpern 64, welche nur eine geringe axiale Abmessung aufweisen, kann der Sperrstein 46 in einer axial ausgelenkten Schaltstellung der Synchronisationseinheit 10 (vgl. Figuren 2, 4, 5 und 6) vom Federelement 44 radial nach außen geschoben werden und eine axiale Bewegung der Schaltmuffe 20 bzw. des Schaltkörpers 64 in die nicht-geschaltete Neutralstellung der Synchronisationseinheit 10 behindern. Dieser unerwünschte Effekt sowie damit einhergehende, mögliche Fehlfunktionen beim Ausrücken des geschalteten Gangs werden durch die axialen Fortsätze 72 zuverlässig verhindert.

Die axialen Fortsätze 72 des Sperrsteins 46 erstrecken sich radial weiter nach außen als der Grundkörper 70, sodass sich auf der radialen Außenseite des Sperrsteins 46 eine Nut 74 im Bereich des Grundkörpers 70 ausbildet, die in tangentialer Richtung verläuft. Dabei ist eine radiale Außenseite 76 des Grundkörpers 70 jeweils durch eine geneigte Nutflankenfläche 78 mit einer radialen Außenseite 80 der axialen Fortsätze 72 verbunden.

Die Figur 11 zeigt eine Ausführungsform der Synchronisationseinheit 10, die sich von der Ausführungsform gemäß Figur 5 lediglich dadurch unterscheidet, dass an axialen Enden 86 der axialen Fortsätze 72 des Sperrsteins 46 Haltenasen 88 angeformt sind, welche sich radial nach außen erstrecken. Diese Haltenasen 88 bilden somit in der dargestellten, axial ausgelenkten Schaltstellung der Synchronisationseinheit 10 einen axialen Anschlag für die Schaltmuffe 20. Alternativ kann die axiale Auslenkung der Schaltmuffe 20 in ihrer Schaltstellung auch durch einen Anschlag zwischen einem Vorsprung 89 der Kopplungsstifte 38 und der Kupplungsscheibe 28 definiert werden, wie dies in den Figuren 4 und 5 angedeutet ist. Gemäß Figur 4 muss dabei die Abmessung der einzelnen Kopplungsstifte 38 in Umfangsrichtung größer sein als ein Zahnabstand der Schaltverzahnung 30, sodass der an die Hinterschneidung 63 angrenzende Vorsprung 89 der Kopplungsstifte 38 an den Zahnspitzen der Schaltverzahnung 30 anschlägt.

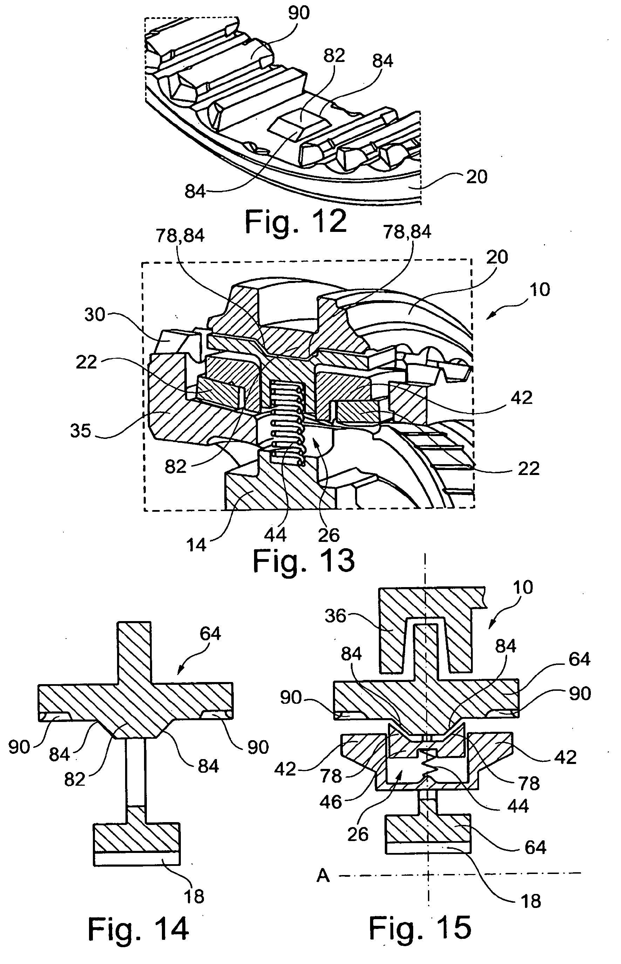

Wie in den Figuren 12 und 13 dargestellt, weist die Schaltmuffe 20 im Bereich des Sperrsteins 46 einen Blocksperrzahn 82 auf, welcher in der nicht-geschalteten Neutralstellung der Synchronisationseinheit 10 in die Nut 74 des Sperrsteins 46 eingreift. Der Blocksperrzahn 82 ist dabei axial durch geneigte Sperrflächen 84 begrenzt, die in der nicht-geschalteten Neutralstellung der Synchronisationseinheit 10 jeweils an eine der geneigten Nutflankenflächen 78 angrenzen.

Vorzugsweise entspricht die Neigung der Nutflankenflächen 78 im Wesentlichen der Neigung der angrenzenden Sperrflächen 84, um eine Flächenpressung sowie den daraus resultierenden Verschleiß zu minimieren.

Über die Neigung der Nutflankenflächen 78 und der Sperrflächen 84 lässt sich im Übrigen auf einfache Art und Weise diejenige Kraftkomponente der Schaltkraft Fₛ festlegen, mit welcher der Sperrstein 46 entgegen der Kraft des Federelements 44 radial nach innen beaufschlagt wird.

Die Ausführungsform gemäß den Figuren 12 und 13 zeigt im Übrigen auch, dass der oben beschriebene und in den Figuren 1 bis 3 und 5 bis 11 dargestellte Sperrstein 46 mit dem radial im Synchronstein 42 geführten, mittigen Grundkörper 70 sowie den axialen Fortsätze 72, die sich in der nicht-geschalteten Neutralstellung zwischen den Synchronstein 42 und die Schaltmuffe 20 bzw. den Schaltkörper 64 erstrecken, auch in Synchronisationseinheiten 10 eingesetzt werden kann, bei denen die Kopplung zwischen der Schaltmuffe 20 und dem Kupplungskörper 35 über komplementäre Verzahnungen 30, 90 und nicht über Kopplungsstifte 38 erfolgt.

Infolge der axialen Fortsätze 72 ist die Schaltmuffe 20 bzw. der Schaltkörper 64 während eines Schaltvorgangs in ständigem Kontakt mit dem Sperrstein 46, so dass ein Verklemmen des Sperrsteins 46 nahezu ausgeschlossen ist. Der anhand der Figuren 1 bis 3 und 5 bis 11 beschriebene Sperrstein 46 wirkt sich derart positiv auf die Schaltsicherheit und den Schaltkomfort des Schaltgetriebes 12 aus, dass die vorteilhafte Geometrie dieses Sperrsteins 46 für sich genommen bereits als Erfindung angesehen werden kann.

Die obigen Ausführungen in Bezug auf den Blocksperrzahn 82 sowie dessen Zusammenwirken mit einem Sperrstein 46 gemäß Figur 10 lassen sich von der Ausführungsform gemäß den Figuren 12 und 13 analog auch auf Ausführungsformen gemäß den Figuren 1 bis 11 übertragen, bei denen die Schaltmuffe 20 oder der Schaltkörper 64 Kopplungsstifte 38 aufweist.

Die Figur 14 zeigt einen nicht erfindungsgemäßen Schaltkörper 64, der statt Kopplungsstiften 38 eine Innenverzahnung 90 aufweist, um eine drehfeste Kopplung zum Gangrad 24 herzustellen. In Figur 15 ist der Schaltkörper 64 gemäß Figur 14 in eine herkömmliche Synchronisationseinheit 10 eingebaut.

Die Figuren 14 und 15 verdeutlichen damit, dass die einstückige Ausbildung von Schaltmuffe 20 und Synchronkörper 14 auch bei herkömmlichen Synchronisationseinheiten mit einer als Sperrkeilsynchronisationsbaugruppe ausgebildeten Vorsynchroneinheit 26 möglich ist.

## Patentansprüche

1. Synchronisationseinheit eines Schaltgetriebes (12), mit
einem Synchronkörper (14), der auf einer Getriebewelle (16) drehfest angebracht ist,
einer Schaltmuffe (20), die relativ zum Synchronkörper (14) drehfest angeordnet ist,
einem sperrverzahnungsfrei ausgebildeten Synchronring (22) zur Kopplung des Synchronkörpers (14) mit einem Gangrad (24) des Schaltgetriebes (12) über eine Reibverbindung, sowie
einer Vorsynchroneinheit (26), die an der Schaltmuffe (20) angreift,
wobei die Vorsynchroneinheit (26) bei einer axialen Betätigung der Schaltmuffe (20) den Synchronring (22) mit einer axialen Schaltkraft (Fₛ) gegen das zu koppelnde Gangrad (24) beaufschlagt und eine Axialverschiebung der Schaltmuffe (20) zum Gangrad (24) hin sperren oder freigeben kann,
**dadurch gekennzeichnet, dass** an der Schaltmuffe (20) mehrere Kopplungsstifte (38) angebracht sind, die jeweils axial über eine Stirnseite (40) der Schaltmuffe hinausragen und gangradseitig so in eine zugeordnete Kopplungsgeometrie lösbar eingreifen können, dass das Gangrad (24) und der Synchronkörper (14) im Wesentlichen drehfest gekoppelt sind.

2. Synchronisationseinheit nach Anspruch 1, **dadurch gekennzeichnet, dass** die Kopplungsstifte (38) in Öffnungen (52) gelagert sind, die sich axial durch die Schaltmuffe (20) erstrecken und in Umfangsrichtung gleichmäßig verteilt sind, wobei die Kopplungsstifte (38) vorzugsweise fest mit der Schaltmuffe (20) verbunden sind.

3. Synchronisationseinheit nach einem der vorhergehenden Ansprüche,
**dadurch gekennzeichnet, dass** die Kopplungsstifte (38) einen rechteckigen Querschnitt (60) aufweisen.

4. Synchronisationseinheit nach einem der vorhergehenden Ansprüche,
**dadurch gekennzeichnet, dass** sich ein Querschnitt (60) der Kopplungsstifte (38) von der Stirnseite (40) der Schaltmuffe (20) in Richtung zu einem freien Stiftende (62) hin zunächst verringert und dann wieder vergrößert.

5. Synchronisationseinheit nach einem der vorhergehenden Ansprüche,
**dadurch gekennzeichnet, dass** ein axiales, der Schaltmuffe (20) abgewandtes, freies Stiftende (62) keil- oder kegelförmig zugespitzt ist.

6. Synchronisationseinheit nach einem der vorhergehenden Ansprüche,
**dadurch gekennzeichnet, dass** die Schaltmuffe (20) und der Synchronkörper (14) als einstückiger Schaltkörper (64) ausgeführt sind, wobei der Schaltkörper (64) insbesondere ein pulvermetallurgisch hergestelltes Sinterteil ist.

7. Synchronisationseinheit nach Anspruch 6, **dadurch gekennzeichnet, dass** der Schaltkörper (64) als einstückige Blechringscheibe ausgebildet oder aus mehreren axial hintereinander angeordneten Blechringscheiben zusammengesetzt ist.

8. Synchronisationseinheit nach einem der vorhergehenden Ansprüche,
**dadurch gekennzeichnet, dass** die Vorsynchroneinheit (26) einen Sperrstein umfasst, der eine Sperrverzahnung mit mehreren Sperrzähnen aufweist, wobei die Sperrverzahnung eine Axialbewegung der Schaltmuffe (20) relativ zum Sperrstein freigeben oder sperren kann.

9. Synchronisationseinheit nach einem der Ansprüche 1 bis 7, **dadurch gekennzeichnet, dass** die Vorsynchroneinheit (26) eine Sperrkeilsynchronisationsbaugruppe mit einem Synchronstein (42), einem Federelement (44) und einem Sperrstein (46) ist, wobei der Sperrstein (46) durch das Federelement (44) radial gegen die Schaltmuffe (20) beaufschlagt ist und eine Axialbewegung der Schaltmuffe (20) zum Gangrad (24) hin freigeben oder sperren kann.

10. Synchronisationseinheit nach Anspruch 9, **dadurch gekennzeichnet, dass** sich der Synchronstein (42) in radialer Richtung am Synchronring (22) abstützt.

11. Synchronisationseinheit nach Anspruch 9 oder 10, **dadurch gekennzeichnet, dass** die Sperrkeilsynchronisationsbaugruppe eine vormontierte und vorgespannte Baueinheit ist, bei der sich das Federelement (44) am Synchronstein (42) abstützt.

12. Synchronisationseinheit nach einem der Ansprüche 9 bis 11, **dadurch gekennzeichnet, dass** der Sperrstein (46) einen radial im Synchronstein (42) geführten, mittigen Grundkörper (70) aufweist, sowie axiale Fortsätze (72), die sich zwischen den Synchronstein (42) und die Schaltmuffe (20) erstrecken, insbesondere wobei sich die axialen Fortsätze (72) radial weiter nach außen erstrecken als der Grundkörper (70), so dass sich auf einer radialen Außenseite des Sperrsteins (46) eine Nut (74) ausbildet, die in tangentialer Richtung verläuft, insbesondere wobei eine radiale Außenseite (76) des Grundkörpers (70) jeweils durch eine geneigte Nutflankenfläche (78) mit einer radialen Außenseite (80) der Fortsätze (72) verbunden ist.

13. Synchronisationseinheit nach Anspruch 12, **dadurch gekennzeichnet, dass** die Schaltmuffe (20) einen Blocksperrzahn (82) aufweist, der in einer nicht-geschalteten Neutralstellung der Synchronisationseinheit (10) in die Nut (74) des Sperrsteins (46) eingreift.

14. Synchronisationseinheit nach Anspruch 13, **dadurch gekennzeichnet, dass** der Blocksperrzahn (82) axial durch geneigte Sperrflächen (84) begrenzt ist, die in einer nicht-geschalteten Neutralstellung der Synchronisationseinheit (10) jeweils an eine der geneigten Nutflankenflächen (78) angrenzen.

15. Synchronisationseinheit nach einem der Ansprüche 12 bis 14, **dadurch gekennzeichnet, dass** an axialen Enden (86) der axialen Fortsätze (72) Haltenasen (88) angeformt sind, die sich radial nach außen erstrecken.

## Claims

1. A synchronization unit of a manual transmission (12), comprising
a synchronizer body (14) which is mounted on a gear shaft (16) so as to be non-rotatable relative thereto,
a shifting sleeve (20) which is arranged so as to be non-rotatable relative to the synchronizer body (14),
a synchronizer ring (22) configured free of a locking toothing, for coupling the synchronizer body (14) to a speed change gear (24) of the manual transmission (12) by means of a frictional connection, and
a pre-synchronizing unit (26) which engages the shifting sleeve (20),
the pre-synchronizing unit (26), upon an axial actuation of the shifting sleeve (20), applying an axial shifting force (F_{S}) to urge the synchronizer ring (22) against the speed change gear (24) to be coupled, and being adapted to disable or enable an axial displacement of the shifting sleeve (20) towards the speed change gear (24),
**characterized in that** the shifting sleeve (20) has a plurality of coupling pins (38) mounted thereto, which each protrude axially over a face side (40) of the shifting sleeve and are adapted to releasably engage with an associated coupling geometry on the speed change gear side such that the speed change gear (24) and the synchronizer body (14) are coupled so as to be substantially non-rotatable relative to each other.

2. The synchronization unit according to claim 1, **characterized in that** the coupling pins (38) are supported in openings (52) that extend axially through the shifting sleeve (20) and are uniformly distributed in the peripheral direction, the coupling pins (38) preferably being firmly connected with the shifting sleeve (20).

3. The synchronization unit according to either of the preceding claims,
**characterized in that** the coupling pins (38) have a rectangular cross-section (60).

4. The synchronization unit according to any of the preceding claims,
**characterized in that** a cross-section (60) of the coupling pins (38) first decreases and then increases again from the face side (40) of the shifting sleeve (20) towards a free pin end (62).

5. The synchronization unit according to any of the preceding claims,
**characterized in that** an axial free pin end (62) facing away from the shifting sleeve (20) is tapered so as to be wedge- or cone-shaped.

6. The synchronization unit according to any of the preceding claims,
**characterized in that** the shifting sleeve (20) and the synchronizer body (14) are configured as a one-piece shifting body (64), the shifting body (64) being more particularly a sintered part produced by powder metallurgy.

7. The synchronization unit according to claim 6, **characterized in that** the shifting body (64) is configured as a one-piece sheet metal ring disc or is fitted together from a plurality of sheet metal ring discs arranged axially one behind the other.

8. The synchronization unit according to any of the preceding claims,
**characterized in that** the pre-synchronizing unit (26) comprises a locking block which includes a locking toothing having a plurality of locking teeth, the locking toothing being adapted to enable or disable an axial movement of the shifting sleeve (20) relative to the locking block.

9. The synchronization unit according to any of claims 1 to 7, **characterized in that** the pre-synchronizing unit (26) is a locking wedge synchronization assembly having a synchronizer block (42), a spring element (44), and a locking block (46), the locking block (46) being urged radially against the shifting sleeve (20) by the spring element (44) and being adapted to enable or disable an axial movement of the shifting sleeve (20) towards the speed change gear (24).

10. The synchronization unit according to claim 9, **characterized in that** the synchronizer block (42) rests against the synchronizer ring (22) in the radial direction.

11. The synchronization unit according to claim 9 or 10, **characterized in that** the locking wedge synchronization assembly is a preassembled and preloaded structural unit in which the spring element (44) rests against the synchronizer block (42).

12. The synchronization unit according to any of claims 9 to 11,
**characterized in that** the locking block (46) includes a central base body (70) guided radially in the synchronizer block (42) and axial extensions (72) which extend between the synchronizer block (42) and the shifting sleeve (20), the axial extensions (72) more particularly extending radially further outwards than the base body (70), so that a groove (74) that extends in the tangential direction is formed on a radial outer face of the locking block (46), a radial outer face (76) of the base body (70) more particularly being connected with a radial outer face (80) of the extensions (72) by a respective inclined groove side surface (78).

13. The synchronization unit according to claim 12, **characterized in that** the shifting sleeve (20) includes a block locking tooth (82) which, in a non-shifted neutral position of the synchronization unit (10), engages with the groove (74) of the locking block (46).

14. The synchronization unit according to claim 13, **characterized in that** the block locking tooth (82) is delimited axially by inclined locking surfaces (84) which, in a non-shifted neutral position of the synchronization unit (10), are each adjacent to one of the inclined groove side surfaces (78).

15. The synchronization unit according to any of claims 12 to 14,
**characterized in that** axial ends (86) of the axial extensions (72) have holding lugs (88) molded thereon which extend radially outwards.

## Revendications

1. Unité de synchronisation de boîte de vitesses (12), comportant
un corps de synchronisation (14) qui est monté solidaire en rotation sur un arbre de transmission (16),
un manchon coulissant (20) qui est monté solidaire en rotation par rapport au corps de synchronisation (14),
une bague de synchronisation (22) réalisée sans denture de verrouillage pour le couplage du corps de synchronisation (14) à un pignon de vitesse (24) de la boîte de vitesses (12) au moyen d'une liaison par frottement, et
une unité de pré-synchronisation (26) qui s'engage sur le manchon coulissant (20),
l'unité de pré-synchronisation (26) sollicitant la bague de synchronisation (22) avec une force de commutation axiale (F_{S}) contre le pignon de vitesse (24) à coupler lors d'un actionnement axial du manchon coulissant (20) et étant apte à bloquer ou à autoriser un déplacement axial du manchon coulissant (20) par rapport au pignon de vitesse (24),
**caractérisée en ce que** plusieurs pion de couplage (38) sont agencés sur le manchon coulissant (20), lesquels font chacun axialement saillie d'une face frontale (40) du manchon coulissant et sont aptes à s'engager du côté pignon de vitesse de manière détachable dans une géométrie de couplage associée de sorte que le pignon de vitesse (24) et le corps de synchronisation (14) sont couplés sensiblement de manière solidaire en rotation.

2. Unité de synchronisation selon la revendication 1, **caractérisée en ce que** les pions de couplage (38) sont montés dans des orifices (52) qui s'étendent axialement à travers le manchon coulissant (20) et sont régulièrement répartis dans le sens périphérique, les pions de couplage (38) étant de préférence reliés de manière solidaire au manchon coulissant (20).

3. Unité de synchronisation selon l'une des revendications précédentes,
**caractérisée en ce que** les pions de couplage (38) présentent une section transversale (60) rectangulaire.

4. Unité de synchronisation selon l'une des revendications précédentes,
**caractérisée en ce qu'**une section transversale (60) des pions de couplage (38) diminue tout d'abord et s'agrandie ensuite de nouveau de la face frontale (40) du manchon coulissant (20) en direction d'une extrémité de pion (62) libre.

5. Unité de synchronisation selon l'une des revendications précédentes,
**caractérisée en ce qu'**une extrémité de pion libre (62) axiale et détournée du manchon coulissant (20) est effilée en forme de coin ou en forme de cône.

6. Unité de synchronisation selon l'une des revendications précédentes,
**caractérisée en ce que** le manchon coulissant (20) et le corps de synchronisation (14) sont réalisés sous forme de corps de commutation (64) monobloc, le corps de commutation (64) étant en particulier une pièce frittée fabriquée par métallurgie des poudres.

7. Unité de synchronisation selon la revendication 6, **caractérisée en ce que** le corps de commutation (64) est réalisé sous forme de disque annulaire monobloc en tôle ou est composé de plusieurs disques annulaires en tôle agencés axialement les uns derrière les autres.

8. Unité de synchronisation selon l'une des revendications précédentes,
**caractérisée en ce que** l'unité de pré-synchronisation (26) comprend un coulisseau de verrouillage qui présente une denture de verrouillage avec plusieurs dents de verrouillage, la denture de verrouillage étant apte à autoriser ou à bloquer un mouvement axial du manchon coulissant (20) par rapport au coulisseau de verrouillage.

9. Unité de synchronisation selon l'une des revendications 1 à 7,
**caractérisée en ce que** l'unité de pré-synchronisation (26) est un ensemble de synchronisation à clavette de verrouillage qui présente un coulisseau de synchronisation (42), un élément ressort (44) et un coulisseau de verrouillage (46), le coulisseau de verrouillage (46) étant sollicité radialement contre le manchon coulissant (20) par l'élément ressort (44) et étant apte à autoriser ou à bloquer un mouvement axial du manchon coulissant (20) par rapport au pignon de vitesse (24).

10. Unité de synchronisation selon la revendication 9, **caractérisée en ce que** le coulisseau de synchronisation (42) prend appui sur la bague de synchronisation (22) dans le sens radial.

11. Unité de synchronisation selon la revendication 9 ou 10, **caractérisée en ce que** l'ensemble de synchronisation à clavette de verrouillage est une unité de montage pré-montée et pré-contrainte dans laquelle l'élément ressort (44) prend appui sur le coulisseau de synchronisation (42).

12. Unité de synchronisation selon l'une des revendications 9 à 11,
**caractérisée en ce que** le coulisseau de verrouillage (46) présente un corps de base (70) central guidé radialement dans le coulisseau de synchronisation (42) ainsi que des saillies axiales (72) qui s'étendent entre le coulisseau de synchronisation (42) et le manchon coulissant (20), les saillies axiales (72) s'étendant en particulier radialement plus loin vers l'extérieur que le corps de base (70) de sorte qu'une rainure (74) se forme sur une face extérieure radiale du coulisseau de verrouillage (46) laquelle s'étend dans le sens tangentiel, une face extérieure radiale (76) du corps de base (70) étant en particulier respectivement reliée à une face extérieure radiale (80) des saillies (72) par une face de flanc de rainure (78) inclinée.

13. Unité de synchronisation selon la revendication 12, **caractérisée en ce que** le manchon coulissant (20) présente une dent de verrouillage de bloc (82) qui s'engage dans la rainure (74) du coulisseau de verrouillage (46) dans une position neutre non-commutée de l'unité de synchronisation (10).

14. Unité de synchronisation selon la revendication 13, **caractérisée en ce que** la dent de verrouillage de bloc (82) est délimitée axialement par des faces de verrouillage inclinées (84) qui sont respectivement adjacentes à l'une des faces de flanc de rainure (78) inclinées dans une position neutre non-commutée de l'unité de synchronisation (10).

15. Unité de synchronisation selon l'une des revendications 12 à 14,
**caractérisée en ce que** des nez de retenue (88) qui s'étendent radialement vers l'extérieur sont conformés sur des extrémités axiales (86) des saillies axiales (72).
